# EUROPEAN PATENT SPECIFICATION

(11) **EP 2 108 072 B1**
(45) Date of publication and mention of the grant of the patent: **14.06.2017**
(21) Application number: 08738417.8
(22) Date of filing: 01.02.2008
(51) Int. Cl.: E04F 15/02

(54) **SYSTEM FOR THE REMOVABLE FASTENING OF WOOD-BLOCKS FOR WOOD FLOORING OR THE LIKE**
SYSTEM ZUR VORÜBERGEHENDEN BEFESTIGUNG VON HOLZBLÖCKEN FÜR HOLZBÖDEN ODER ÄHNLICHES
SYSTÈME DE FIXATION AMOVIBLE DE BLOCS DE BOIS POUR PLANCHER EN BOIS OU SIMILAIRE

(30) Priority: 02.02.2007 IT NA20070021
(43) Date of publication of application: 14.10.2009
(73) Proprietor: Gio'Speedy Di Giovanni Iovene, 81030 Castel Volturno (IT)
(72) Inventor: IOVENE, Giovanni, I-81030 Castel Volturno (CE) (IT)
(74) Representative: Cipriani, Guido
(86) International application number: PCT/IT2008/000065
(87) International publication number: WO 2008/093383

(56) References cited:
- EP-A- 0 443 190
- EP-A2- 0 067 640
- DE-A1- 3 024 285
- DE-U1- 29 707 884
- FR-A- 2 818 677
- GB-A- 2 409 012
- JP-A- 2003 227 224
- US-A1- 2003 101 673

## Description

An outdoor wood flooring is installed by riveting or screwing a number of wood-blocks close to one another on a bottom frame.

The wood-blocks are disposed in several rows spaced apart from one another by some millimeters to allow the water to flow away, with such gaps being sealed by a suitable rubber gasket in an indoor wood flooring.

The replacement of one or more wood-blocks is only possible in such flooring by cutting the wood-blocks.

In case of partial replacement of the flooring of a terrace, it is necessary to cut all the flooring of a terrace, it is necessary to cut all the wood-blocks concerned with loss of time and waste of wood-blocks as well as at a high labour and material cost.

The present industrial invention aims at providing a system for fastening wood-blocks allowing the wood-blocks to be removed at any place one by one without affecting the adjacent wood-blocks.

The solution consists of a fastening system according to claim 1 using supports for blocking and releasing the wood-blocks of the flooring by their rotation.

This solution will be more readily understood by referring to the accompanying drawings showing an indicative, not limiting embodiment. FR 2 818 677 A1 discloses a system according to the preamble of claim 1.

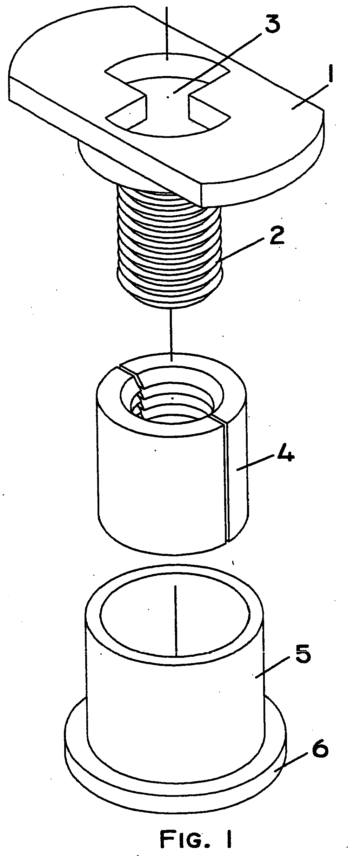

Fig. 1 of table 1/6 shows an exploded view of the several portions of a so-called butterfly support.

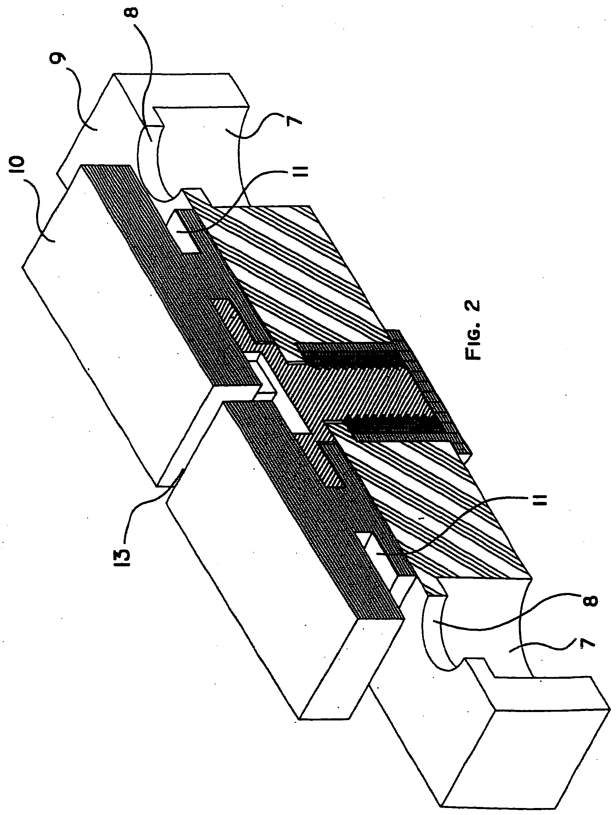

Fig. 2 of table 2/6 shows a section of a detail of the assembled butterfly support.

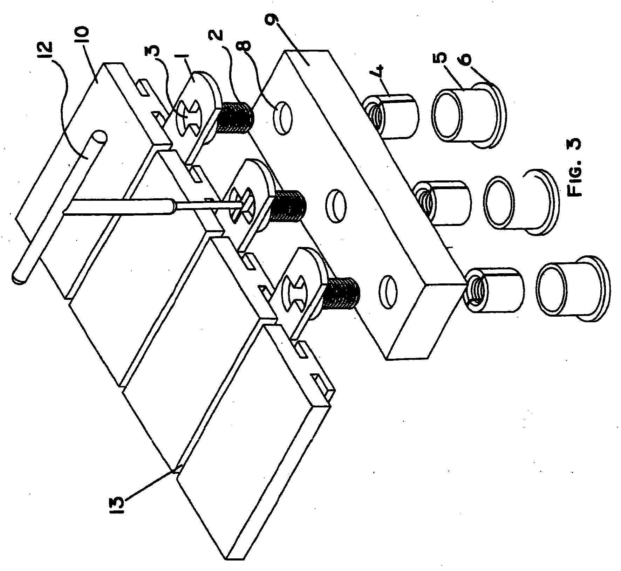

Fig. 3 of table 3/6 shows an exploded axonometric view of three butterfly supports upon their assembling, the butterfly supports being in the released position of the wood-blocks.

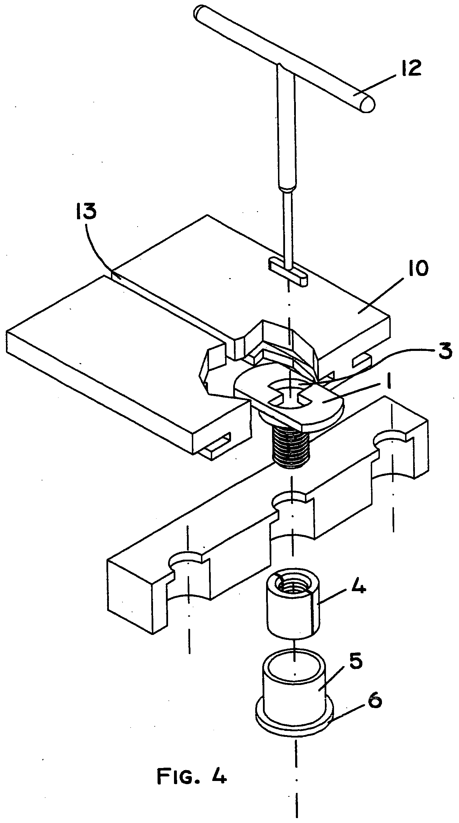

Fig. 4 of table 4/6 shows an exploded axonometric section view of a butterfly support in its released position applied between two adjacent wood-blocks.

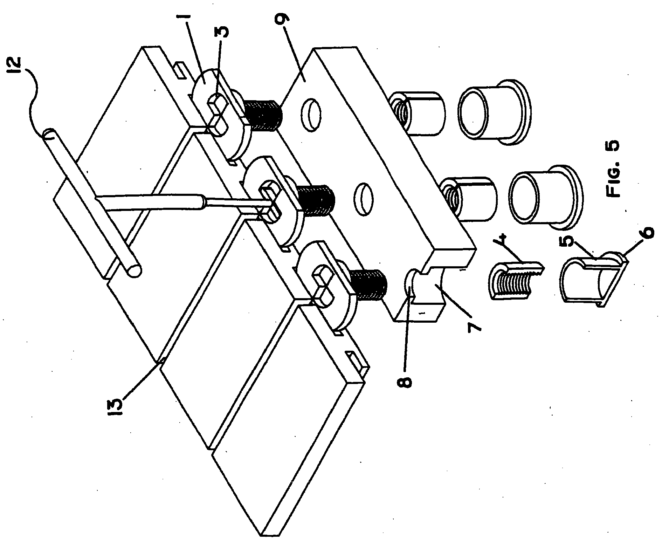

Fig 5 of table 5/6 shows a butterfly support in the blocked position of the wood-blocks.

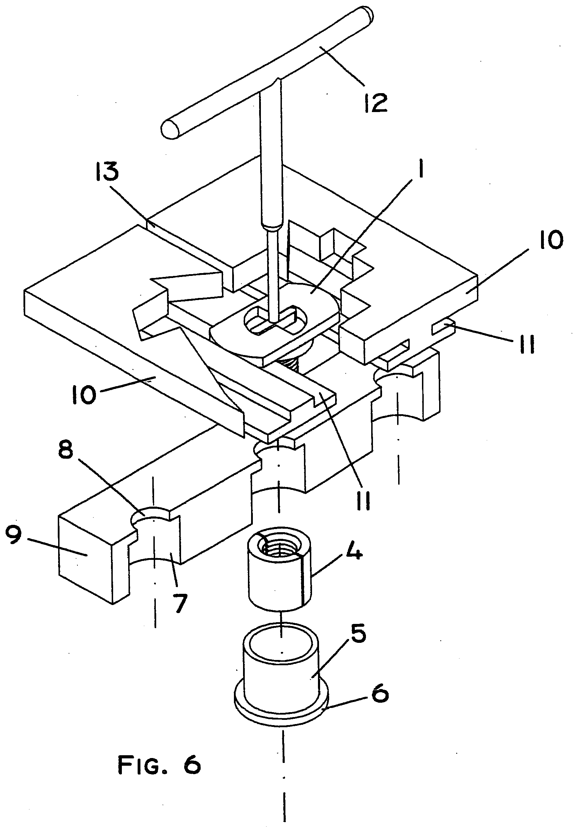

Fig. 6 of table 6/6 shows a cut-away view of the same butterfly support as Fig. 5 in the blocked position of two wood-blocks.

With reference to the figures, the system consists of a particular butterfly support which is formed by a T-shaped head provided with a rectangular flange (1) with rounded lower sides and a peduncle (2) with knurled side surface.

At the center of the flange an opening is formed with the shape of a butterfly (3), and a bush (4) having a knurled inside surface and being longitudinally divided into two portions is applied upon assembling to the peduncle (2) and fastened thereto by applying a cylindrical plug (5) with widened base (6).

The seat of the frame for the butterfly supports consists of a lower hole (7) with the same diameter as plug (5) and an upper hole (8) with a lower diameter so as to form a shoulder against which plug (5) abuts.

The butterfly supports are conveniently assembled with a predetermined spacing along the frames (9) in holes (7).

Wood-blocks (10) to be fastened to frames (9) are provided longitudinally with a profiling 11) giving them a double-T transversal shape with different flanges.

Under such circumstances, as the butterfly supports are assembled to the frame in orthogonal position with respect to the longitudinal axis of the frame, the wood-blocks of the flooring are positioned from the top between two such supports and are then blocked by rotating by the butterfly supports by 90°.

Such an operation is carried out by inserting a key tool (12) in the opening (3)

The distance between the butterfly supports is determined so that the openings are formed in each of them in front of the gaps (13) between adjacent wood-blocks; this gaps are also provided between wood-blocks applied by traditional system to allow water to flow away and the wood to expand. Such gaps are plugged by rubber gaskets in an indoor flooring.

From the foregoing description it is self-evident that a wood flooring can be assembled by blocking each wood-block to the relative frame by the butterfly supports by using the disclosed butterfly supports fastened to the frame as well as the longitudinally milled wood-blocks.

Each butterfly support is located in the milled portion after its assembling beneath two wood-blocks placed side by side, the access to the upper opening (3) through gap (13) being formed to allow the insertion of a key tool (12).

Once key tool (12) is inserted into each butterfly support and rotated to the blocked position, it is rotated in the opposite direction to permit its extraction owing the interior shape of the opening.

The system has such a construction as to allow the wood-blocks to be disassembled at any point of the flooring without cutting the same as well as even only one wood-block to be removed for replacement, or cleaning or varnishing.

Unlike the system of the prior art, the system of the invention does not need any rivet or screw for fastening the wood-blocks or complex fixed joint.

Construction an shape variations can be made to the solution of the present invention by those skilled in the art without departing from the scope of the inventive concept which is defined by the appended claims.

## Claims

1. A system for assembling and disassembling wood-blocks of a wood flooring, said system comprising wood-blocks (10), frames (9) supporting said wood-blocks (10) and supports, said supports are formed by a T-shaped head providing a rectangular flange (1), with rounded lower sides and a peduncle (2) with knurled side surface, said supports are able to rotate, are fastened along said frames (9) and are spaced apart along said frames according to a predetermined pitch, said supports being movable by a key tool (12) to rotate and to engage two adjacent wood-blocks (10) in the space formed between the milled longitudinal side surface of two of said wood-blocks, said system being **characterized in that** the supports are fastened inside through holes (7, 8) formed in said frames and come out of said through holes (7, 8) only by said T_ shaped head (1) having such a thickness as to be received in the cavity (13) formed in the milled longitudinal side surface (11) of the wood-blocks, and that said supports are butterfly supports having in the center of the flange an opening (3) formed with the shape of a butterfly in which said key tool (12) can be inserted to be rotated in such a direction as to abut against the inside walls of the opening (3), thus allowing the supports to rotate with respect to the frames (9), a rotation in the opposite direction causing only the disengaging of the key tool owing to the inside shape of the opening.

2. The system according to the preceding claim, **characterized in that** the supports are rotatable mounted to the frame by a knurled rod (2) which is received between the interior knurled walls of two half-cylinders (4) which are held together by an outside cylinder (5) with enlarged base.

3. The system according to the preceding claims, **characterized in that** the supports are space apart according to a predetermined pitch along the longitudinal axis of the frames so that their longitudinal axis coincides in the released position with the longitudinal axis of the gap (13) by which the wood-blocks are spaced apart.

4. The system according to the preceding claims, **characterized in that** a suitable milling is made at the longitudinal side faces of the wood-blocks.

## Patentansprüche

1. Ein System zum Zusammensetzen und Auseinandernehmen von Holzblöcken eines Holzfußbodens, wobei das System Holzblöcke (10), die Holzblöcke (10) tragende Rahmen (9) und Halterungen umfasst, wobei die Halterungen von einem T-förmigen, einen rechteckigen Flansch (1) bereitstellenden Kopf mit gerundeten unteren Seiten und einem Stil (2) mit geriffelter seitlicher Oberfläche gebildet sind, wobei die Halterungen sich drehen können, entlang der Rahmen (9) angebracht sind und entlang der Rahmen gemäß einem vorbestimmten Abstand voneinander beabstandet sind, wobei die Halterungen mittels eines Schlüsselwerkzeugs (12) bewegbar sind, um sich zu drehen und zwei benachbarte Holzblöcke (10) im zwischen den gefrästen, längsverlaufenden seitlichen Oberflächen von zwei der Holzblöcke gebildeten Raum zu erfassen, wobei das System dadurch charakterisiert ist, dass die Halterungen innerhalb von in den Rahmen gebildeten Durchgangslöchern (7,8) angebracht sind und aus den Durchgangslöchern (7,8) nur mit dem T-förmigen Kopf (1) hervorragen, der eine derartige Dicke hat, dass er in dem in den gefrästen, längsverlaufenden seitlichen Oberflächen (11) der Holzblöcke gebildeten Hohlraum (13) aufgenommen wird, und dass die Halterungen Schmetterlingshalterungen sind, die in der Mitte des Flansches eine mit der Gestalt eines Schmetterlings gebildete Öffnung (3) aufweisen, in die das Schlüsselwerkzeug (12) eingeführt werden kann, um in einer derartigen Richtung gedreht zu werden, dass es an die Innenwände der Öffnung (3) anstößt, wodurch es den Halterungen ermöglicht wird, sich relativ zu den Rahmen (9) zu drehen, wobei eine Drehung in der Gegenrichtung aufgrund der inneren Gestalt der Öffnung nur das Lösen des Schlüsselwerkzeugs bewirkt.

2. Das System gemäß dem vorhergehenden Anspruch, **dadurch gekennzeichnet, dass** die Halterungen mittels eines geriffelten Stabes (2), der zwischen den inneren, geriffelten Wänden zweier Halbzylinder (4), die von einem Außenzylinder (5) mit erweitertem Fußteil zusammengehalten sind, aufgenommen ist, drehbar am Rahmen angebracht sind.

3. Das System gemäß den vorstehenden Ansprüchen, **dadurch gekennzeichnet, dass** die Halterungen gemäß einem vorbestimmten Abstand entlang der Längsachse der Rahmen voneinander beabstandet sind, sodass ihre Längsachse in der gelösten Position mit der Längsachse des Spalts (13), durch den die Holzblöcke voneinander beabstandet sind, zusammenfällt.

4. Das System gemäß den vorstehenden Ansprüchen, **dadurch gekennzeichnet, dass** an den längsverlaufenden Seitenflächen der Holzblöcke eine geeignete Fräsung gemacht ist.

## Revendications

1. Système pour monter et démonter des blocs de bois d'un plancher en bois, ledit système comprenant des blocs de bois (10), des bâtis (9) supportant lesdits blocs de bois (10) et des supports, lesdits supports sont formés par une tête en forme de T fournissant une bride rectangulaire (1), avec des côtés inférieurs arrondis et un pédoncule (2) avec une surface latérale moletée, lesdits supports pouvent tourner, sont fixés le long desdits bâtis (9) et sont espacés le long desdits bâtis selon un écartement prédéterminé, lesdits supports étant mobiles grâce à un outil de clé (12) pour faire tourner et pour mettre en prise deux blocs de bois (10) adjacents dans l'espace formé entre la surface latérale longitudinale fraisée de deux desdits blocs de bois, ledit système étant **caractérisé en ce que** les supports sont fixés à l'intérieur des trous débouchants (7, 8) formés dans lesdits bâtis et sortent desdits trous débouchants (7, 8) uniquement par ladite tête en forme de T (1) ayant une épaisseur afin d'être reçus dans la cavité (13) formée dans la surface latérale longitudinale fraisée (11) des blocs de bois, et **en ce que** lesdits supports sont des supports à papillon ayant, dans le centre de la bride, une ouverture (3) formée avec la forme d'un papillon dans lequel ledit outil de clé (12) peut être inséré pour être entraîné en rotation dans une direction telle qu'il vient en butée contre les parois intérieures de l'ouverture (3), permettant ainsi aux supports de tourner par rapport aux bâtis (9), une rotation dans la direction opposée ne provoquant que le dégagement de l'outil de clé en raison de la forme intérieure de l'ouverture.

2. Système selon la revendication précédente, **caractérisé en ce que** les supports sont montés de manière rotative sur le bâti par une tige moletée (2) qui est reçue entre les parois moletées intérieures de deux demi-cylindres (4) qui sont maintenus ensemble par un cylindre extérieur (5) avec une base agrandie.

3. Système selon la revendication précédente, **caractérisé en ce que** les supports sont espacés selon un écartement prédéterminé le long de l'axe longitudinal des bâtis de sorte que leur axe longitudinal coïncide dans la position libérée avec l'axe longitudinal de l'espace (13) selon lequel les blocs de bois sont espacés.

4. Système selon les revendications précédentes, **caractérisé en ce qu'**un fraisage approprié est réalisé au niveau des faces latérales longitudinales des blocs de bois.
